# EUROPEAN PATENT APPLICATION

(11) **EP 3 349 282 A1**
(43) Date of publication of application: **18.07.2018**
(21) Application number: 16844226.7
(22) Date of filing: 30.08.2016
(51) Int. Cl.: H01M 4/86, C22C 1/08, C22C 19/05, H01M 8/10

(54) **METAL POROUS BODY, FUEL CELL, AND METHOD FOR MANUFACTURING METAL POROUS BODY**

(30) Priority: 10.09.2015 JP 2015178157; 28.01.2016 JP 2016014148
(71) Applicant: Sumitomo Electric Industries, Ltd., Osaka-shi, Osaka 541-0041 (JP)
(72) Inventor: OKUNO, Kazuki, Itami-shi Hyogo 664-0016 (JP); HIGASHINO, Takahiro, Itami-shi Hyogo 664-0016 (JP); MAJIMA, Masatoshi, Itami-shi Hyogo 664-0016 (JP); AWAZU, Tomoyuki, Itami-shi Hyogo 664-0016 (JP)
(74) Representative: Boult Wade Tennant
(86) International application number: PCT/JP2016/075290
(87) International publication number: WO 2017/043365

(57) **Abstract**

A porous metal body includes a three-dimensional mesh-like structure consisting of a skeleton, the porous metal body having a flat plate-like external form including a pair of main surfaces and end surfaces that connect the pair of main surfaces to each other, in which the skeleton includes a main metal layer consisting of nickel or a nickel alloy, and an oxide layer on a surface of the main metal layer, in which the oxide layer is not arranged on portions of the surface of the main metal layer included in the pair of main surfaces of the porous metal body.

## Description

### Technical Field

The present invention relates to a porous metal body, a fuel battery, and a method for producing a porous metal body.

The present application claims priority to Japanese Patent Application No. 2015-178157 filed in the Japan Patent Office on September 10, 2015 and Japanese Patent Application No. 2016-014148 filed in the Japan Patent Office on January 28, 2016), the entire contents of which are incorporated herein by reference.

### Background Art

Polymer electrolyte fuel cells (PEFCs) including ion-exchange membranes serving as electrolytes are in practical use for cogeneration, and automobiles powered by them are being put to practical use.

Polymer electrolyte fuel cells have a basic structure including an anode, a membrane, and a cathode. The membrane is an ion-exchange membrane, and a fluorine-containing exchange membrane containing a sulfone group is mainly used. An improvement in the characteristics of such membranes promotes the practical use of polymer electrolyte fuel cells.

Polymer electrolyte fuel cells are used in multilayer structures obtained by stacking cells each including a gas diffusion layer and a separator arranged on each of the back sides of an anode and a cathode (for example, PTL 1). The operation temperature is in the range of about 70°C to about 110°C in view of, for example, performance, removal of formed water from the system by evaporation, and life. A higher operating temperature results in an improvement in discharge characteristics. For cogeneration, while high-temperature exhaust heat is advantageously obtained, the life is shorter than that at a low temperature.

As a gas diffusion layer, carbon paper including carbon fibers formed in a nonwoven fabric-like state is commonly used and functions as a current collector. Grooves are formed in a carbon plate used as a separator also functioning as a gas diffusion layer, thereby facilitating the supply and the exhaust of a gas. As described above, the carbon paper and the grooves are commonly used in combination as a gas diffusion layer.

The carbon paper also functions to inhibit a membrane electrode assembly (MEA) from entering the grooves of the separator.

### Citation List

### Patent Literature

PTL 1: Japanese Unexamined Patent Application Publication No. 2011-129265

### Summary of Invention

### Solution to Problem

A porous metal body according to an embodiment of the present invention includes a three-dimensional mesh-like structure consisting of a skeleton, the porous metal body having a flat plate-like external form including a pair of main surfaces and end surfaces that connect the pair of main surfaces to each other, in which the skeleton includes a main metal layer consisting of nickel or a nickel alloy, and an oxide layer on a surface of the main metal layer, in which the oxide layer is not arranged on portions of the surface of the main metal layer included in the pair of main surfaces of the porous metal body. Brief Description of Drawings

[Fig. 1] Figure 1 is a schematic diagram of an example of the structure of a fuel battery according to an embodiment of the present invention.
[Fig. 2] Figure 2 is a graph illustrating the evaluation results of the corrosion resistance of porous metal bodies 1 to 3 produced in examples.
[Fig. 3] Figure 3 is a graph illustrating the evaluation results of the power generation characteristics of batterys A to D produced in the examples. Description of Embodiments

### [Problem to be Solved by Disclosure]

The porosity of grooves formed in a carbon plate used as a separator of a polymer electrolyte fuel battery depends on the extent to which the grooves are arranged in the carbon and is about 50% in practice. That is, the grooves are arranged in about 1/2 of the area of a surface of the carbon plate. Each of the grooves has a rectangular shape and a width of about 500 µm.

To uniformly supply a gas to an MEA at a low pressure, wider and deeper grooves are preferred, and a higher proportion of the grooves per unit area is preferred. However, a larger number of grooves arranged in the separator results in a decrease in the conductivity of the separator, thereby decreasing battery characteristics. The conductivity of the separator has a great influence on the battery characteristics. Thus, preferably, the grooves have a lower proportion and are shallower from the viewpoint of the battery characteristics.

The arrangement of a larger number of grooves having a smaller width uniformly supplies a gas to the MEA. However, the use of a smaller width causes easy entrance of the MEA into the grooves due to a pressure applied during the integration of a single battery, thus leading to the deformation of the MEA and the degradation of the function as the grooves. The use of a larger number of larger sized batteries causes these harmful effects to become more prominent. That is, these harmful effects become more prominent as the size of the electrodes, the number of batteries, and the required load increase.

As described above, although a higher proportion of the grooves arranged in the separator is preferred from the viewpoint of gas supply, a lower proportion of the grooves is preferred from the viewpoint of electrical characteristics. Furthermore, the grooves are required to have high accuracy, and a process for forming the grooves is complicated, thus increasing the cost of the separator. In addition, the grooves are arranged in one direction; thus, for example, when the grooves are plugged with water, the movement of a gas is inhibited.

To deal with this, the inventors have conducted studies on the use of a porous metal body having a three-dimensional mesh-like structure as a gas diffusion layer. The porous metal body having a three-dimensional mesh-like structure had a very high porosity, thus reducing the pressure loss.

However, because conventional porous metal bodies consisting of nickel have corrosion resistance lower than carbon materials, there is room for improvement in this respect. Porous metal bodies composed of alloys of nickel and tin or chromium, which have higher corrosion resistance than porous metal bodies composed of nickel, have already been reported. The porous nickel-tin alloy body and the porous nickel-chromium alloy body have higher corrosion resistance than porous metal bodies consisting of nickel, but do not have corrosion resistance comparable to carbon materials.

The corrosion resistance of a porous metal body used as a gas diffusion layer becomes particularly problematic when the porous metal body is used, not in a fuel battery that is always discharged, but in a fuel battery that is subjected to intermittent discharge in which discharge is halted for a period of time and then performed again. The reason for this is as follows.

In a polymer electrolyte fuel battery, hydrogen containing water vapor is supplied to an anode to form hydrogen ions during normal discharge. The hydrogen ions migrate toward a cathode through an ion-exchange membrane, are formed into water by an electrochemical reaction, and go outside the system. However, when discharge is halt by stopping the supply of hydrogen and air, formed water left in the gas diffusion layer flows reversely to come into contact with the ion-exchange membrane. At this time, in the case where the gas diffusion layer is composed of a metal material and where the metal is dissolved in the formed water even in a very small amount, the formed water adversely affects the ion-exchange membrane to decrease the water retention characteristics of the membrane, thereby decreasing the discharge characteristics. Thus, the gas diffusion layer for the fuel battery that is often halted is required to have more stringent corrosion resistance.

In light of the foregoing problems, it is an object of the present invention to provide a porous metal body that has good corrosion resistance and that can be used as a gas diffusion layer of a fuel battery.

### Advantageous Effects of Disclosure

According to the present invention, it is possible to provide the porous metal body that has good corrosion resistance and that can be used as a gas diffusion layer of a fuel battery.

### [Description of embodiments of invention]

Embodiments of the present invention are first listed and explained.
(1) A porous metal body according to an aspect of the present invention includes a three-dimensional mesh-like structure consisting of a skeleton, the porous metal body having a flat plate-like external form including a pair of main surfaces and end surfaces that connect the pair of main surfaces to each other,
   in which the skeleton includes:
   a main metal layer consisting of nickel or a nickel alloy; and
   an oxide layer on a surface of the main metal layer,
   in which the oxide layer is not arranged on portions of the surface of the main metal layer included in the pair of main surfaces of the porous metal body.
   According to the present invention described in item (1), it is possible to provide the porous metal body that has good corrosion resistance and that can be used as a gas diffusion layer of a fuel battery.
   In the porous metal body according to an embodiment of the present invention, "the pair of main surfaces of the porous metal body" refers to a pair of main surfaces of the external form of the porous metal body, the sectional portions of the skeleton being located on the main surfaces.
(2) In the porous metal body described in item (1) according to an embodiment of the present invention, the skeleton includes a conductive layer arranged on a surface of the oxide layer.
   According to the invention described in item (2), it is possible to provide the porous metal body having the skeleton with a conductive surface.
(3) In the porous metal body described in item (2) according to an embodiment of the present invention, the conductive layer contains a carbon powder and a binder.
   According to the invention described in item (3), it is possible to provide the porous metal body that has good corrosion resistance and that includes the conductive layer having good adhesion on the surface of the skeleton.
(4) In the porous metal body described in item (2) or (3) according to an embodiment of the present invention, the conductive layer contains silver.
   According to the invention described in item (4), it is possible to the porous metal body including the conductive layer having higher conductivity on the surface of the skeleton.
(5) In the porous metal body described in any one of items (1) to (4) according to an embodiment of the present invention, the nickel alloy contains nickel and at least one of chromium, tin, and tungsten.
(6) In the porous metal body described in any one of items (1) to (5) according to an embodiment of the present invention, the oxide layer is composed of nickel oxide.
   According to the invention described in item (5) or (6), it is possible to provide the porous metal body including the skeleton having higher corrosion resistance.
(7) A fuel battery according to an embodiment of the present invention includes the porous metal body described in any one of items (1) to (6), the porous metal body serving as a gas diffusion layer.
   According to the invention described in item (7), it is possible to provide the high-power fuel battery having a large amount of power generation per volume.
(8) A method for producing a porous metal body according to an embodiment of the present invention, the porous metal body being the porous metal body according to item (1) described above, includes:
   a provision step of providing a porous body having a three-dimensional mesh-like structure consisting of a skeleton, the porous body having a flat plate-like external form including a pair of main surfaces and end surfaces that connect the pair of main surfaces to each other, the skeleton including a main metal layer consisting of nickel or a nickel alloy;
   a heat-treatment step of forming an oxide layer on a surface of the main metal layer by heating the porous body in an oxidizing atmosphere; and
   a removal step of removing portions of the oxide layer formed on the surface of the main metal layer included in the pair of main surfaces.
   According to the invention described in item (8), it is possible to provide the method for producing a porous metal body that has good corrosion resistance and that can be used as a gas diffusion layer of a fuel battery.
(9) The method for producing a porous metal body described in item (8) according to an embodiment of the present invention further includes:
   after the provision step and before the heat-treatment step,
   an acid treatment step of immersing the porous body in an acid solution and drying the porous body.
(10) In the method for producing a porous metal body described in item (9) according to an embodiment of the present invention,
   the acid solution is nitric acid, sulfuric acid, hydrochloric acid, or acetic acid.
   According to the invention described in item (9) or (10), it is possible to provide the method for producing a porous metal body including the thick oxide layer on the surface of the skeleton.
(11) The method for producing a porous metal body described in any one of items (8) to (10) according to an embodiment of the present invention further includes:
   after the heat-treatment step,
   a conductive layer formation step of forming a conductive layer on a surface of the oxide layer.
   According to the invention described in item (11), it is possible to provide the method for producing the porous metal body described in item (2). In the invention described in item (11), the conductive layer formation step may be performed at any time after the heat-treatment step, may be performed before the removal step, or may be performed after the removal step.

### [Details of Embodiments of Invention]

Specific examples of a porous metal body and so forth according to an embodiment of the present invention will be described below. The present invention is not limited to these examples. The present invention is indicated by the appended claims. It is intended to include any modifications within the scope and meaning equivalent to the scope of the claims.

### <Porous metal body>

A porous metal body according to an embodiment of the present invention has a flat plate-like external form including a pair of main surfaces and end surfaces that connect the pair of main surfaces to each other and has a skeleton having a three-dimensional mesh-like structure. The skeleton includes a main metal layer consisting of nickel or a nickel alloy and an oxide layer on a surface of the main metal layer, provided that the oxide layer is not arranged on portions of the surface of the main metal layer included in the pair of main surfaces of the porous metal body.

As described above, the main metal layer is a portion of the skeleton of the porous metal body consisting of nickel or a nickel alloy. The section of the skeleton is exposed at the main surfaces of the porous metal body.

In the porous metal body according to an embodiment of the present invention, the oxide layer of an element contained in the main metal layer is arranged on the surface of the main metal layer included in the skeleton of the porous metal body. That is, the oxide layer of nickel, a nickel alloy, or a metal contained in a nickel alloy is arranged on the surface of the main metal layer.

The arrangement of the oxide layer on the surface of the main metal layer allows the porous metal body according to an embodiment of the present invention to have higher corrosion resistance to sulfuric acid or the like than nickel. For example, in the case where nickel oxide is formed as the oxide layer on the surface of the main metal layer of the porous metal body, the porous metal body has improved corrosion resistance because nickel oxide has higher corrosion resistance than nickel.

The oxide layer is not arranged on the pair of main surfaces of the porous metal body according to an embodiment of the present invention, i.e., sectional portions of the skeleton. Thus, the pair of main surfaces of the porous metal body can be brought into contact with another conductive material to establish conduction.

The porous metal body according to an embodiment of the present invention has higher corrosion resistance to sulfuric acid or the like than conventional porous metal bodies consisting of nickel or nickel alloys and thus can be preferably used as a gas diffusion layer for a fuel battery. The porous metal body has high porosity and the three-dimensional mesh-like structure. Thus, the use of the porous metal body as a gas diffusion layer enables a reduction in gas pressure loss and an improvement in the diffusibility of the gas. This can improve the power generation performance of the MEA of a fuel battery.

In the porous metal body according to an embodiment of the present invention, a conductive layer is preferably arranged on the oxide layer. In this case, the surface of the skeleton of the porous metal body can be conductive.

A material for the conductive layer is not particularly limited as long as it is conductive and is arranged in the form of a film on the surface of the oxide layer of the porous metal body. Preferably, the material contains a conductive powder and a binder. In this case, a film-like conductive layer that is in intimate contact with the surface of the oxide layer of the porous metal body is formed.

As the conductive powder, for example, a carbon powder can be preferably used. The carbon powder is lightweight and easily available and is thus preferred. Examples of the carbon powder include carbon black, activated carbon, and graphite. These can be used alone or in combination as a mixture. As the conductive powder other than the carbon powder, for example, a powder of gold, silver, palladium, copper, aluminum, or the like can be used. Among these, a silver powder can be preferably used in view of corrosion resistance and conductivity.

As the binder, a resin can be preferably used. In particular, a resin having a good film-forming ability (film-forming properties) and heat resistance can be preferably used. A resin that withstands about 70°C to 110°C, which is an operating temperature of a polymer electrolyte fuel battery, is preferred.

Specific examples of the resin that can be used include polyolefin such as polyethylene and polypropylene, polyacrylate, poly(vinyl acetate), vinyl alcohol-polystyrene copolymers, vinyl alcohol-polystyrene copolymers, ethylene-methyl acrylate copolymers, poly(methacrylate), and formalized poly(vinyl alcohol). These may be used alone or in combination as a mixture. Furthermore, polyurethane, a silicone resin, polyimide, a fluororesin, or the like may be preferably used as the resin.

The nickel alloy contained in the porous metal body is not particularly limited. Examples thereof include alloys of nickel and at least one of, for example, tin, chromium, aluminum, titanium, copper, cobalt, tungsten, iron, manganese, silver, gold, phosphorus, and/or boron. A metal such that an alloy formed from the metal and nickel has higher corrosion resistance to sulfuric acid than nickel is preferred.

The nickel alloy is preferably an alloy containing nickel and at least one of chromium, tin, and tungsten in view of corrosion resistance and production costs. The nickel alloy may contain a single or multiple types of metal components other than nickel.

In the case where a single type of metal component other than nickel is used, the nickel alloy is preferably nickel-chromium, nickel-tin, or nickel-tungsten.

The porous metal body according to an embodiment of the present invention may intentionally or inevitably contain a component that does not form an alloy with nickel, in addition to nickel or the nickel alloy.

The thickness of the external form of the porous metal body, i.e., the height of the end surfaces connecting one main surface to the other main surface, is preferably 0.10 mm or more and 1.20 mm or less. Because the thickness of the external form of the porous metal body is 0.10 mm or more and 1.20 mm or less, the use of the porous metal body as a gas diffusion layer of a fuel battery can contribute to a reduction in the size of the fuel battery. Furthermore, because the porous metal body has a low gas pressure loss and good gas diffusibility, the fuel battery can have a higher output power. Because the thickness of the external form of the porous metal body is 0.10 mm or more, the mechanical strength of the porous metal body is maintained, and the porous metal body has sufficient gas diffusibility; thus, the porous metal body can be preferably used as a gas diffusion layer of a fuel battery. Because the thickness of the external form of the porous metal body is 1.20 mm or less, the porous metal body can contribute to a reduction in the size of a fuel battery. From these points of view, the thickness of the external form of the porous metal body is preferably 0.20 mm or more and 1.0 mm or less, more preferably 0.30 mm or more and 0.80 mm or less.

The porous metal body according to an embodiment of the present invention preferably has a porosity of 51% or more and 90% or less. A porosity of 51% or more enables the gas pressure loss to be reduced when the porous metal body is used as a gas diffusion layer of a fuel battery. A porosity of 90% or less enables the gas diffusibility to be further increased when the porous metal body is used as a gas diffusion layer of a fuel battery. The reason for this is that because the porous metal body has a three-dimensional mesh-like structure, a lower porosity results in a higher rate of diffusion of a gas that impinges on the skeleton of the porous metal body. A porosity of the porous metal body of 85% or less results in good conductivity. From these points of view, the porous metal body according to an embodiment of the present invention preferably has a porosity of 55% or more and 88% or less, more preferably 60% or more and 85% or less.

The porous metal body according to an embodiment of the present invention preferably has a nickel coating weight of about 200 g/m² or more and about 1,200 g/m² or less. In the case where the porous metal body contains another metal component, the total coating weight of the metal components is preferably about 200 g/m² or more and about 1,200 g/m² or less.

The total coating weight of the metal is 200 g/m² or more; thus, the porous metal body has sufficiently high strength and conductivity. The total coating weight of the metal is 1,200 g/m² or less, thus inhibiting increases in production cost and weight. From these points of view, the porous metal body according to an embodiment of the present invention more preferably has a coating weight of 300 g/m² or more and 1,100 g/m² or less, even more preferably 400 g/m² or more and 1,000 g/m² or less.

The porous metal body preferably has a pore size of 100 µm or more and 700 µm or less when viewed from above. A pore size of 100 µm or more can result in a low fuel-gas pressure loss to provide a high-power fuel battery. A pore size of 700 µm or less can result in the smooth diffusion of a fuel gas to improve the use efficiency of a fuel. From these points of view, the porous metal body more preferably has a pore size of 150 µm or more and 650 µm or less, even more preferably 200 µm or more and 600 µm or less. The phrase "viewed from above" used here refers to the case where the flat-shaped porous metal body is viewed in plan in the thickness direction thereof.

The average pore size is a value determined from the reciprocal of the number of cells of the porous metal body. The number of cells is a value determined by drawing a line having a length of one inch on a main surface of the porous metal body and counting the number of cells that intersects with the line and that are located on the outermost surface. The units are cells per inch, provided that one inch is defined as 2.54 centimeters.

### <Fuel Battery>

A fuel battery according to an embodiment of the present invention is a fuel battery including the porous metal body according to an embodiment of the present invention, the porous metal body being used as a gas diffusion layer. The type of fuel battery is not particularly limited. The fuel battery may be a polymer electrolyte fuel battery or a solid oxide fuel battery.

A polymer electrolyte fuel battery will be described below as an example.

A conventional ion-exchange membrane can be used for the polymer electrolyte fuel battery.

For example, a commercially available membrane-electrode assembly in which an ion-exchange membrane and a catalyst layer are joined together can be used as it is. Gas diffusion electrodes serving as an anode and a cathode and Nafion (registered trademark) 112 serving as an ion-exchange membrane are integrated together, each of the gas diffusion electrodes supporting about 0.5 mg/cm² of a platinum catalyst.

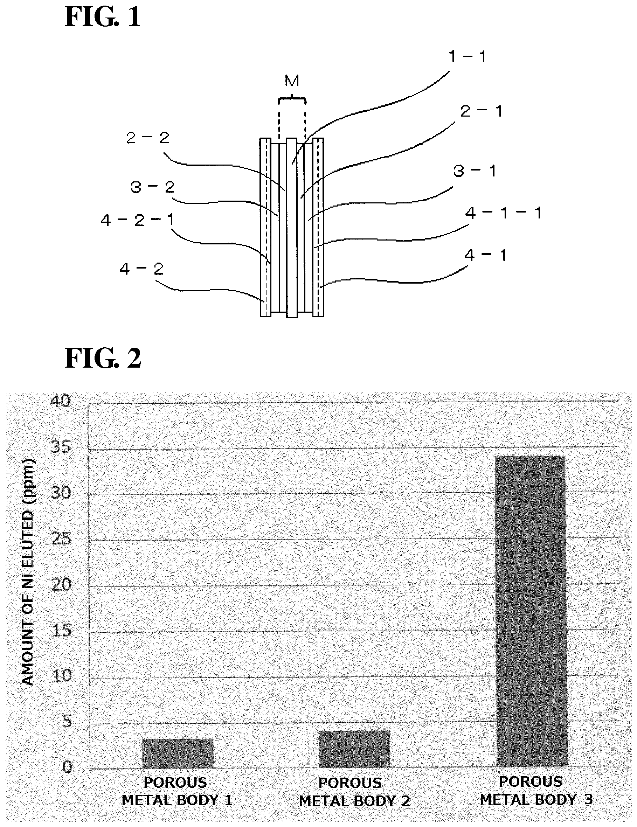

Figure 1 is a schematic cross-sectional view of a single cell of a polymer electrolyte fuel battery.

In Figure 1, a membrane-electrode assembly (MEA) M includes gas diffusion electrodes, i.e., platinum catalyst-containing activated carbon layers (2-1 and 2-2), on both surfaces of an ion-exchange membrane 1-1. One of the gas diffusion electrodes is a hydrogen electrode serving as an anode, and the other is an air electrode serving as a cathode. Current collectors (3-1 and 3-2) each function as both of a current collector and a gas diffusion layer for each electrode. For example, commercially available water-repellent carbon paper can be used. As the carbon paper, for example, carbon paper having a porosity of about 50% and water repellency provided by the addition of about 15% of a fluororesin can be used.

As separators (4-1 and 4-2), for example, commercially available graphite plates can be used. Gas diffusion layers (4-1-1 and 4-2-1) are porous metal bodies according to an embodiment of the present invention and also serve as gas supply-exhaust channels. The porous metal bodies according to an embodiment of the present invention have a very smaller thickness than conventional porous metal bodies; thus, the use thereof can result in a smaller fuel battery.

While Figure 1 illustrates a single cell, fuel batteries practically used have a structure in which cells are stacked with separators interposed therebetween so as to achieve a desired voltage. Typically, the cells are connected in series. Thus, the cells are stacked in such a manner that when one side is a cathode, the other side faces an anode of an adjacent cell, and the resulting stack is pressed and integrated together with, for example, bolts and nuts at their peripheries.

### <Method for Producing Porous Metal Body>

The porous metal body according to an embodiment of the present invention can be produced by various methods. Examples of the production methods include the methods described in items (8) to (11).

The steps in the method for producing the porous metal body will be described in detail below.

### -Provision Step-

This step is a step of providing a porous body including a main metal layer consisting of nickel or a nickel alloy serving as a starting material. The porous metal body may have a flat plate-like external form including a pair of main surfaces and end surfaces that connect the pair of main surfaces to each other and may have a skeleton having a three-dimensional mesh-like structure and having a main metal layer consisting of nickel or a nickel alloy.

While a method for producing the porous body including the main metal layer consisting of nickel or the nickel alloy is not particularly limited, the porous body is preferably produced by a plating method as described below. That is, the porous body including the main metal layer consisting of nickel or the nickel alloy can be produced by subjecting a surface of the skeleton of a resin shaped body having a three-dimensional mesh-like structure to electrical conduction treatment, performing plating with nickel or the nickel alloy, and removing the resin shaped body serving as a base.

### (Resin Shaped Body Having Three-Dimensional Mesh-Like Structure)

The flat plate-like resin shaped body that is used as a base and has the three-dimensional mesh-like structure may be porous, and a known or commercially available item can be used. For example, resin foams, nonwoven fabrics, felt, woven fabrics can be used. These may also be used in combination as needed. A material thereof is preferably, but not particularly limited to, a material that can be removed by plating a metal and then subjecting the material to burn-off treatment. In particular, if a sheet-like resin article has high stiffness, the article is broken; thus, a flexible material is preferred in view of the handling of the resin shaped body.

As the resin shaped body, a resin foam is preferably used. Examples of the resin foam include urethane foams, styrene foams, and melamine resin foams. Among these, urethane foams are particularly preferred from the viewpoint of their high porosity.

The porosity of the resin shaped body is usually, but not limited to, about 60% or more and about 97% or less, preferably about 80% or more and about 96% or less. The thickness of the resin shaped body is appropriately determined, depending on the application of the resulting porous metal body, and may be usually, but not limited to about 600 µm or more and about 5,000 µm or less, preferably about 800 µm or more and about 2,000 µm or less. The resin shaped body has very high porosity; thus, if the thickness is 500 µm or less, the flat plate-like form cannot be maintained.

The case where the resin foam is used as the resin shaped body having the three-dimensional mesh-like structure will be described below by way of example.

### (Electrical Conduction Treatment of Surface of Skeleton of Resin Shaped Body)

The electrical conduction treatment of the surface of the skeleton of the resin shaped body is not particularly limited as long as it is a method by which a conductive layer can be arranged on the surface of the skeleton of the resin shaped body. Examples of a material for the conductive layer (conductive coating layer) include metals such as nickel, tin, chromium, copper, iron, tungsten, titanium, and stainless steel, and carbonaceous powders such as carbon powder.

Specific example of the electrical conduction treatment preferably include the application of a conductive coating prepared by adding a binder to a metal powder composed of, for example, nickel, tin, or chromium or graphite powder, electroless plating treatment, and gas-phase treatment such as sputtering, vapor deposition, and ion plating.

The electroless plating treatment with nickel can be performed by, for example, immersing a resin foam in a known electroless nickel plating bath such as an aqueous nickel sulfate solution containing sodium hypophosphite serving as a reductant. The resin foam may be immersed in, for example, an activation solution containing a minute amount of palladium ions (a cleaning solution available from Japan Kanigen Co., Ltd.) before the immersion in the plating bath, as needed.

Regarding sputtering treatment with nickel or chromium, for example, after the resin foam is attached to a substrate holder, a direct-current voltage is applied between the holder and a target (nickel or chromium) while an inert gas is introduced. This may bombard nickel or chromium with the ionized inert gas to deposit ejected nickel particles or chromium particles on a surface of the resin foam.

An example of the application of the conductive coating such as a carbon powder or a metal powder is a method in which the surface of the skeleton of the resin foam is coated with a mixture of a binder and a conductive powder (for example, a powder of a metal material such as stainless steel or a carbon powder, e.g., crystalline graphite or amorphous carbon black). In this method, a chromium powder, a tin powder, or a tungsten powder may be used in addition to the carbon powder. Thereby, a porous body consisting of nickel-chromium, nickel-tin, or nickel-tungsten can be produced.

Examples of the carbon powder that can be used include, but are not particularly limited to, carbon black, activated carbon, and graphite. For the purpose of providing uniform conductivity, carbon black may be used. For the purpose of providing the conductive coating layer having satisfactory strength, fine graphite powder may be used. The mixture containing activated carbon is preferably used. When a slurry is prepared, a commonly used thickener such as carboxymethylcellulose (CMC) may be added thereto. The slurry can be applied to the skeleton of the resin foam having a plate- or strip-like shape and having a thickness adjusted by cutting and then dried to result in the conductive surface of the skeleton of the resin foam.

### (Formation of Nickel-Coating Layer)

Although a nickel-coating layer may be formed by electroless nickel plating or nickel electroplating, the nickel electroplating is preferred because of its good efficiency. The nickel electroplating treatment may be performed in the usual manner. A known or commercially available plating bath can be used for the nickel electroplating treatment. Examples thereof include Watts baths, chloride baths, and sulfamate baths.

A nickel coating layer can be formed on the conductive coating layer by immersing the resin shaped body including the conductive coating layer on the surface formed by the electroless plating or sputtering in the plating bath, connecting the resin shaped body to a cathode, connecting a nickel counter electrode to an anode, and passing a direct current or intermittent pulsed current.

The coating weight of the nickel-coating layer formed by electroplating may be adjusted in such a manner that the porous body having the ultimate metal composition has a nickel content of 50% or more by mass.

In the porous body including the main metal layer consisting of nickel, the coating weight of nickel is preferably about 200 g/m² or more and about 1,200 g/m² or less. In the porous body including the main metal layer consisting of a nickel alloy and another metal component, the total coating weight of the metals is preferably about 200 g/m² or more and about 1,200 g/m² or less. The coating weight of nickel or the nickel alloy is more preferably 300 g/m² or more and 1,100 g/m² or less, even more preferably 400 g/m² or more and 1,000 g/m² or less.

In the case of producing the porous body including the main metal layer consisting of nickel-chromium or nickel-tin, a chromium-coating layer or tin-coating layer is formed on the nickel-coating layer, and then heat treatment is performed to form an alloy.

### ((Formation of Chromium-Coating Layer))

In the case of forming the chromium-coating layer on the nickel-coating layer, for example, the formation can be performed as follows: That is, the formation may be performed by a known chromium plating method. A known or commercially available plating bath can be used as a plating bath. For example, a hexavalent chromium bath or trivalent chromium bath can be used. The chromium-coating layer can be formed by immersing the porous body to be subjected to plating in the chromium plating bath, connecting the porous body to the cathode, connecting a chromium plate serving as a counter electrode to the anode, and passing a direct current or intermittent pulsed current.

### ((Formation of Tin-Coating Layer))

For example, a step of forming the tin-coating layer on the nickel-coating layer can be performed as follows: That is, a plating bath having a composition containing 55 g/L tin(II) sulfate, 100 g/L sulfuric acid, 100 g/L cresol sulfonic acid, 2 g/L gelatin, and 1 g/L β-naphthol is prepared as a sulfate bath. Stirring (shaking of the cathode) is performed at 2 m/min in the plating bath with a temperature of 20°C at a cathode current density of 2 A/dm² and an anode current density of 1 A/dm² or less, thereby forming the tin-coating layer.

To improve the adhesion of the tin-coating layer, the porous body is preferably subjected to nickel strike plating just before the formation to remove a surface oxide film of the porous body and then placed in the tin plating bath while the porous body is wet without being dried. Thereby, the adhesion of the tin-coating layer can be increased.

The conditions of the nickel strike plating can be set as follows: For example, a bath having a composition of 240 g/L of nickel chloride and 125 ml/L of hydrochloric acid (with a specific gravity of about 1.18) is prepared as a Wood's nickel strike bath. The temperature is room temperature. Nickel or carbon is used as an anode.

The procedure of the plating described above is summarized as follows: degreasing with an Ace Clean (cathode electrolytic degreasing at 5 A/dm² for 1 minute), washing with hot water, washing with water, acid activation (immersion in hydrochloric acid for 1 minute), the Wood's nickel strike plating treatment (5 to 10 A/dm² for 1 minute), washing and the tin plating treatment without drying, washing with water, and drying.

### (Circulation of Plating Solution during Plating)

In the case of the plating of a base such as the resin shaped body having the three-dimensional mesh-like structure, it is usually difficult to uniformly perform the plating of the inside thereof. To prevent the formation of an unplated portion of the inside and reduce the difference in coating weight between the inside and the outside, the circulation of the plating solution is preferably performed. Examples of a circulation method include a method with a pump and a method in which a fan is installed in a plating tank. When a stream of the plating solution impinges on the resin shaped body or the resin shaped body is located adjacent to an suction port using the method, it is effective because the flow of the plating solution can be easily formed inside the resin shaped body.

### (Removal of Resin Shaped Body)

The porous body including the main metal layer consisting of nickel or the nickel alloy can be obtained by removing the resin shaped body used as the base from the resulting resin structure including the nickel-coating layer or nickel alloy-coating layer on its surface. By removing the resin shaped body, the nickel-coating layer or nickel alloy-coating layer serves as the main metal layer of the skeleton of the porous body.

Examples of a method for removing the resin shaped body include, but are not limited to, chemical treatment and a combustion removal method using burning-off. In the case of the burning-off, for example, heating may be performed at about 600°C or higher in an oxidizing atmosphere such as air.

The resulting porous body is subjected to heat treatment in a reducing atmosphere, as needed, to reduce the metal, thereby forming the porous body including the main metal layer consisting of nickel or the nickel alloy.

### -Heat-Treatment Step-

This step is a step of heat-treating the resulting porous body including the main metal layer consisting of nickel or the nickel alloy described above in the oxidizing atmosphere. By this step, an oxide layer composed of an element contained in the main metal layer is formed on the surface of the main metal layer.

The oxidizing atmosphere is not particularly limited and may be an atmosphere in which nickel or the nickel alloy contained in the skeleton is oxidized. For example, the step may be performed in an air atmosphere or an atmosphere containing 10% or more oxygen.

The heat-treatment temperature is preferably about 300°C or higher and about 1,000°C or lower. At 300°C or higher, the oxidation of nickel or the nickel alloy can be promoted. At 1,000°C or lower, excessive oxidation and the deformation of the skeleton can be inhibited.

From these points of view, the heat-treatment temperature is more preferably 300°C or higher and 900°C or lower, even more preferably 350°C or higher and 850°C or lower.

In the heat-treatment step, the heat-treatment time may be a time required to oxidize nickel or the nickel alloy. For example, the soaking time may be about 15 minutes or more and about 2 hours or less.

When the soaking time is 15 minutes or more, nickel or the nickel alloy can be sufficiently oxidized. When the soaking time is 2 hours or less, embrittlement due to the excessive oxidation of nickel or the nickel alloy can be inhibited. From these points of view, the heat-treatment time is more preferably 20 minutes or more and 1.5 hours or less, even more preferably 30 minutes or more and 1 hour or less.

### -Removal Step-

This step is a step of removing portions of the oxide layer formed by the heat treatment on the surface of the main metal layer included in the pair of main surfaces of the porous body. Because the oxide layer is not arranged on the main surfaces of the porous metal body, the main surfaces of the porous metal body can be brought into contact with another conductive material to establish conduction.

A method for removing the portions of the oxide layer formed on the main surfaces of the porous body including the main metal layer consisting of nickel or the nickel alloy is not particularly limited. A method may be employed in which nickel or the nickel alloy contained in the main metal layer is exposed.

Examples of the method that can be preferably employed include a method in which polishing is performed with sand paper or an abrasive, a method in which etching is performed with a chemical solution, and a method with a reductant.

The porous metal body according to an embodiment of the present invention can be produced by the foregoing production method.

It is possible to further increase the thickness of the oxide layer to further enhance the corrosion resistance. In this case, the porous metal body is preferably produced by a method described below.

### -Acid Treatment Step-

Preferably, the porous body including the main metal layer consisting of nickel or the nickel alloy is immersed in an acid solution and dried, and then the heat-treatment step is performed. In this case, the surface of the porous body can be oxidized and roughened to facilitate the progress of oxidation, thereby further increasing the thickness of the oxide layer formed on the surface of the main metal layer.

For the acid solution, for example, nitric acid, sulfuric acid, hydrochloric acid, or acetic acid can be used. The acid solution is preferably an aqueous solution. For example, in the case where dilute nitric acid is used, nickel nitrate is formed on the surface of the porous body and then heated at 250°C or higher to form nickel oxide. Thus, a large amount of the oxide layer can be formed, compared with the case of simply heating nickel.

The formation of the thick oxide layer on the surface of the main metal layer of the skeleton of the porous metal body increases the corrosion resistance of the porous metal body. The porous metal body including the oxide layer has higher corrosion resistance in formed water than a porous metal body that does not include an oxide layer. Thus, the porous metal body including the oxide layer can be used for a member required to have corrosion resistance in formed water and can be preferably used as, for example, a gas diffusion layer of a fuel battery that is often stopped for long-term use.

### -Conductive Layer Formation Step-

The conductive layer is preferably formed on a surface of the oxide layer of the porous metal body, thereby allowing the surface of the skeleton of the porous metal body to be conductive. The conductive layer is not particularly limited as long as it is a layer having conductivity. Considering that the porous metal body is used as a gas diffusion layer of a fuel battery, the conductive layer preferably has good corrosion resistance.

The conductive layer formation step may be performed anytime after the heat-treatment step and may be performed before the removal step or after the removal step.

The formation of the conductive layer can be performed by applying a slurry containing a conductive powder and a binder to the surface of the oxide layer of the porous metal body and drying the slurry. As the conductive powder, for example, a carbon powder can be used. The carbon powder is lightweight and easily available and thus is preferred. Examples of the carbon powder include carbon black, activated carbon, and graphite. These can be used alone or in combination as a mixture. As the conductive powder other than the carbon powder, for example, a powder of gold, silver, palladium, copper, aluminum, or the like can be used. Among these, a silver powder can be preferably used in view of corrosion resistance and conductivity.

As the binder, a resin can be preferably used. A resin having a good film-forming ability (film-forming properties) and heat resistance can be preferably used. A resin that withstands about 70°C to 110°C, which is an operating temperature of a polymer electrolyte fuel battery, is preferred.

Specific examples of the resin that can be used include polyolefin such as polyethylene and polypropylene, polyacrylate, poly(vinyl acetate), vinyl alcohol-polystyrene copolymers, vinyl alcohol-polystyrene copolymers, ethylene-methyl acrylate copolymers, poly(methacrylate), and formalized poly(vinyl alcohol). These may be used alone or in combination as a mixture. Furthermore, polyurethane, a silicone resin, polyimide, a fluororesin, or the like may be preferably used as the resin.

Preferably, the porous metal body produced as described above is further subjected to a step of rolling the porous metal body to adjust the thickness of the external form to 0.10 mm or more and 1.20 mm or less.

### -Thickness Adjustment Step-

This step is a step of rolling the porous metal body to adjust the thickness of the external form to 0.10 mm or more and 1.20 mm or less. The rolling can be performed with, for example, a roller press machine or flat press. The thickness adjustment of the porous metal body can result in a uniform thickness of the external form of the porous metal body and can eliminate variations in surface irregularities. The rolling of the porous metal body can reduce the porosity. The porous metal body is more preferably rolled in such a manner that the external form of the porous metal body has a thickness of 0.20 mm or more and 1.0 mm or less, even more preferably 0.30 mm or more and 0.80 mm or less.

In the case where the porous metal body is used as a gas diffusion layer of a fuel battery, the following procedure may be performed: the porous metal body having a thickness slightly larger than the gas diffusion layer built-in the fuel battery is produced and then deformed by a pressure applied during incorporation into the fuel battery so as to have a thickness of 0.10 mm or more and 1.20 mm or less. In this case, the porous metal body may have a thickness slightly larger than the gas diffusion layer built-in the fuel battery by slightly rolling the porous metal body in advance. This can further increase the adhesion between the MEA and the gas diffusion layer (porous metal body) of the fuel battery.

### <Method for Producing Hydrogen and Apparatus for Producing Hydrogen>

The porous metal body according to an embodiment of the present invention can be suitably used for hydrogen production applications by electrolysis of water, in addition to fuel battery applications. Methods for producing hydrogen are roughly categorized into [1] alkaline water electrolysis, [2] a PEM method, and [3] an SOEC method. The porous metal body can be used in any of the methods.

The alkaline water electrolysis described in [1] is a method for electrolyzing water by immersing an anode and a cathode in a strong alkaline aqueous solution and applying a voltage thereto. The use of the porous metal bodies as the electrodes increases the area of contact between water and each electrode to increase the efficiency of water electrolysis.

In the method for producing hydrogen by the alkaline water electrolysis, each of the porous metal bodies preferably has a pore size of 100 µm or more and 5,000 µm or less when viewed from above. Because each porous metal body has a pore size of 100 µm or more when viewed from above, it is possible to inhibit a decrease in the area of contact between water and each electrode due to the clogging of pore portions of the porous metal body with bubbles of hydrogen and oxygen generated.

Because each porous metal body has a pore size of 5,000 µm or less when viewed from above, each electrode can have a sufficiently large surface area, thus resulting in high efficiency of water electrolysis. From similar points of view, each porous metal body more preferably has a pore size of 400 µm or more and 4,000 µm or less when viewed from above.

The thickness of the porous metal body and the amount of metal may be appropriately selected, depending on the scale of equipment, because the use of a large electrode area can cause warpage and so forth. To achieve both of the removal of the bubbles and a large surface area, porous metal bodies having different pore sizes may be used in combination.

In the case where the porous metal body according to an embodiment of the present invention is used as each electrode in the alkaline water electrolysis, the porous metal body including the conductive layer on the surface of the oxide layer may be used.

The PEM method described in [2] is a method for electrolyzing water with a polymer electrolyte membrane. In this method, an anode and a cathode are arranged on both sides of the polymer electrolyte membrane. A voltage is applied while water flows on the side of the anode. Hydrogen ions generated by the electrolysis of water are transferred to the cathode side through the polymer electrolyte membrane. Hydrogen is collected on the cathode side. The operating temperature is about 100°C. An exact reverse operation is performed with the same structure as the polymer electrolyte fuel battery, which generates power from hydrogen and oxygen to emit water. The anode side and the cathode side are completely separated from each other; thus, high-purity hydrogen is advantageously produced. Water and the hydrogen gas need to permeate both electrodes, i.e., the anode and the cathode; thus, the electrodes need to be conductive porous bodies.

The porous metal body according to an embodiment of the present invention has high porosity and good electrical conductivity and thus can be suitably used for the electrolysis of water by the PEM method, in the same way as the porous metal body can be suitably used for the polymer electrolyte fuel battery. In the method for producing hydrogen using the PEM method, the porous metal body preferably has a pore size of 100 µm or more and 700 µm or less when viewed from above. Because the porous metal body has a pore size of 100 µm or more when viewed from above, it is possible to inhibit a decrease in the area of contact between water and the polymer electrolyte membrane due to the clogging of pore portions of the porous metal body with bubbles of hydrogen and oxygen generated. Because the porous metal body has a pore size of 700 µm or less when viewed from above, a sufficient water retention ability can be ensured to inhibit water from passing therethrough before reactions occur, thereby efficiently performing the electrolysis of water. From similar points of view, the porous metal body more preferably has a pore size of 150 µm or more and 650 µm or less, even more preferably 200 µm or more and 600 µm or less when viewed from above.

The thickness of the porous metal body and the amount of metal may be appropriately selected, depending on the scale of equipment. The use of an insufficient porosity results in a high pressure loss when water is passed therethrough. Thus, the thickness and the amount of metal are preferably adjusted in such a manner that the porosity is 30% or more. In the PEM method, the conduction between the polymer electrolyte membrane and each electrode is established by pressure bonding. Thus, the amount of metal needs to be adjusted in such a manner that an increase in electrical resistance due to deformation and creep during pressing is in the range where no problem arises in practical use. The amount of metal is preferably about 200 g/m² or more and about 1,200 g/m² or less, more preferably about 300 g/m² or more and about 1,100 g/m² or less, even more preferably about 400 g/m² or more and about 1,000 g/m² or less. To achieve both of high porosity and electrical connection, porous metal bodies having different pore sizes may be used in combination.

The SOEC method described in [3] is a method for electrolyzing water with a solid oxide electrolyte membrane. The structure varies, depending on whether the electrolyte membrane is a proton-conducting membrane or an oxygen ion-conducting membrane. In the case of the oxygen ion-conducting membrane, hydrogen is generated on the cathode side to which water vapor is supplied, thereby decreasing the purity of hydrogen. Thus, the proton-conducting membrane is preferably used from the viewpoint of hydrogen production.

In this method, an anode and a cathode are arranged on both sides of the proton-conducting membrane. A voltage is applied while the water vapor is introduced into the anode side. Hydrogen ions generated by the electrolysis of water are transferred to the cathode side through the solid oxide electrolyte membrane. Hydrogen is collected alone on the cathode side. The operating temperature is about 600°C to about 800°C. An exact reverse operation is performed with the same structure as a solid oxide fuel battery, which generates power from hydrogen and oxygen to emit water.

The water vapor and the hydrogen gas need to permeate both electrodes, i.e., the anode and the cathode; thus, in particular, the electrode on the anode side needs to be a conductive porous body that withstands a high-temperature oxidizing atmosphere. The porous metal body according to an embodiment of the present invention has high porosity, good electrical conductivity, high oxidation resistance, and high heat resistance and thus can be suitably used for the electrolysis of water by the SOEC method, in the same way as the porous metal body can be suitably used for the solid oxide fuel battery. A Ni alloy containing a metal such as Cr having high oxidation resistance is preferably used for the electrode used in the oxidizing atmosphere.

In the method for producing hydrogen using the SOEC method, the porous metal body preferably has a pore size of 100 µm or more and 700 µm or less when viewed from above. Because the porous metal body has a pore size of 100 µm or more when viewed from above, it is possible to inhibit a decrease in the area of contact between the water vapor and the solid oxide electrolyte membrane due to the clogging of pore portions of the porous metal body with the water vapor and hydrogen generated. Because the porous metal body has a pore size of 700 µm or less when viewed from above, it is possible to inhibit the passage of the water vapor before the water vapor reacts sufficiently because of an insufficient pressure loss. From similar points of view, the porous metal body more preferably has a pore size of 150 µm or more and 650 µm or less, even more preferably 200 µm or more and 600 µm or less when viewed from above.

The thickness of the porous metal body and the amount of metal may be appropriately selected, depending on the scale of equipment. The use of an insufficient porosity results in a high pressure loss when the water vapor is introduced. Thus, the thickness and the amount of metal are preferably adjusted in such a manner that the porosity is 30% or more. In the SOEC method, the conduction between the solid oxide electrolyte membrane and each electrode is established by pressure bonding. Thus, the amount of metal needs to be adjusted in such a manner that an increase in electrical resistance due to deformation and creep during pressing is in the range where no problem arises in practical use. The amount of metal is preferably about 200 g/m² or more and about 1,200 g/m² or less, more preferably about 300 g/m² or more and about 1,100 g/m² or less, even more preferably about 400 g/m² or more and about 1,000 g/m² or less. To achieve both of high porosity and electrical connection, porous metal bodies having different pore sizes may be used in combination.

### <Appendix>

The foregoing description includes features described in the following appendices.
(Appendix 1) A method for producing hydrogen includes generating hydrogen by electrolysis of water with a porous metal body serving as an electrode, the porous metal body having a three-dimensional mesh-like structure consisting of a skeleton, the porous metal body having a flat plate-like external form including a pair of main surfaces and end surfaces that connect the pair of main surfaces to each other,
   in which the skeleton of the porous metal body includes a main metal layer consisting of nickel or a nickel alloy and an oxide layer on a surface of the main metal layer,
   in which the oxide layer is not arranged on portions of the surface of the main metal layer included in the pair of main surfaces of the porous metal body.
(Appendix 2) In the method for producing hydrogen described in Appendix 1, the skeleton includes:
   a conductive layer arranged on a surface of the oxide layer.
(Appendix 3) In the method for producing hydrogen described in Appendix 2, the conductive layer contains a carbon powder and a binder.
(Appendix 4) In the method for producing hydrogen described in Appendix 2 or 3, the conductive layer contains silver.
(Appendix 5) In the method for producing hydrogen described in any one of Appendices 1 to 4, the nickel alloy contains nickel and at least one of chromium, tin, and tungsten.
(Appendix 6) In the method for producing hydrogen described in any one of Appendices 1 to 5, the oxide layer is composed of nickel oxide.
(Appendix 7) In the method for producing hydrogen described in any one of Appendices 2 to 6, the water is a strong alkaline aqueous solution.
(Appendix 8) In the method for producing hydrogen described in any one of Appendices 1 to 6, the method includes arranging the porous metal bodies on both sides of a polymer electrolyte membrane, bringing the polymer electrolyte membrane into contact with the porous metal bodies, allowing the respective porous metal bodies to function as an anode and a cathode, supplying water to the anode side, and performing electrolysis to generate hydrogen on the cathode side.
(Appendix 9) In the method for producing hydrogen described in any one of Appendices 1 to 6, the method includes arranging the porous metal bodies on both sides of a solid oxide electrolyte membrane, bringing the polymer electrolyte membrane into contact with the porous metal bodies, allowing the respective porous metal bodies to function as an anode and a cathode, supplying water vapor to the anode side, and performing electrolysis to generate hydrogen on the cathode side.
(Appendix 10) An apparatus for producing hydrogen, the apparatus being capable of generating hydrogen by electrolysis of water, includes:
   a porous metal body serving as an electrode and having a three-dimensional mesh-like structure consisting of a skeleton, the porous metal body having a flat plate-like external form including a pair of main surfaces and end surfaces that connect the pair of main surfaces to each other,
   in which the skeleton of the porous metal body includes a main metal layer consisting of nickel or a nickel alloy and an oxide layer on a surface of the main metal layer,
   in which the oxide layer is not arranged on portions of the surface of the main metal layer included in the pair of main surfaces of the porous metal body.
(Appendix 11) In the apparatus for producing hydrogen according to Appendix 10, the skeleton includes:
   a conductive layer arranged on a surface of the oxide layer.
(Appendix 12) In the apparatus for producing hydrogen according to Appendix 11, the conductive layer contains a carbon powder and a binder.
(Appendix 13) In the apparatus for producing hydrogen according to Appendix 11 or 12, the conductive layer contains silver.
(Appendix 14) In the apparatus for producing hydrogen according to any one of Appendices 10 to 13, the nickel alloy contains nickel and at least one of chromium, tin, and tungsten.
(Appendix 15) In the apparatus for producing hydrogen according to any one of Appendices 10 to 14, the oxide layer is composed of nickel oxide.
(Appendix 16) In the apparatus for producing hydrogen according to any one of Appendices 11 to 15, the water is a strong alkaline aqueous solution.
(Appendix 17) In the apparatus for producing hydrogen according to any one of Appendices 10 to 15, the apparatus further includes:
   an anode and a cathode on both sides of a polymer electrolyte membrane,
   the anode and the cathode being in contact with the polymer electrolyte membrane,
   the apparatus being capable of generating hydrogen on the cathode side by electrolysis of water supplied to the anode side,
   in which the porous metal body is used as at least one of the anode and the cathode.
(Appendix 18) In the apparatus for producing hydrogen according to any one of Appendices 10 to 15, the apparatus further includes:
   an anode and a cathode on both sides of a solid oxide electrolyte membrane,
   the anode and the cathode being in contact with the polymer electrolyte membrane,
   the apparatus being capable of generating hydrogen on the cathode side by electrolysis of water vapor supplied to the anode side,
   in which the porous metal body is used as at least one of the anode and the cathode.

### EXAMPLES

While the present invention will be described in more detail below by examples, these examples are illustrative, and a porous metal body and so forth according to the present invention are not limited to these examples. The scope of the invention is defined by the following claims, and is intended to include any modifications within the scope and meaning equivalent to the scope of the claims.

### [Example 1]

### -Production of Porous Metal Body-

### <Provision Step>

### (Conductive Layer Formation Step)

A sheet of a urethane resin foam having a porosity of 90%, an average pore size of 450 µm, and a thickness of 1.3 mm was used as a resin shaped body having a three-dimensional mesh-like structure. Into 5 L of 10% by mass of an acrylic-styrene copolymer emulsion, 1,000 g of a graphite powder having an average particle size of 0.5 µm and 130 g of a chromium powder having an average particle size of 5 µm were dispersed, thereby preparing a slurry. The urethane resin foam was immersed in the slurry. The urethane resin foam was drawn, passed through a nip between rollers to remove an excess of the slurry, and dried to provide a skeleton having a conductive surface. The amount of chromium applied was 70 g/m² after drying.

### (Coating Layer Formation Step)

The resulting conductive urethane resin foam was subjected to nickel electroplating by a known sulfamate bath method. The bath had a known composition mainly containing 430 g/L nickel sulfamate, 7 g/L nickel chloride, and 32 g/L boric acid. The nickel electroplating was performed at a current density of 250 mA/cm². This resulted in a resin structure in which a main metal layer consisting of a nickel-coating layer was arranged on the surface of the skeleton of the resin shaped body. The coating weight of nickel was 600 g/m².

### (Removal of Resin Shaped Body)

The resin structure was heated at 800°C for 15 minutes in air to remove the resin, the graphite powder, and so forth added to the resin shaped body and the slurry by burning-off. Then heat treatment was performed at 1,000°C for 25 minutes in a hydrogen atmosphere to reduce the metals partially oxidized by heating in air and to form an alloy, followed by annealing to provide a porous body including a skeleton having a main metal layer consisting of a nickel-chromium alloy. The uniformity of the alloy was determined by an X-ray analysis and with an electron microscope.

Then the thickness of the porous body including the main metal layer consisting of the nickel-chromium alloy was adjusted to 0.50 mm with a roller press machine. The porous body including the main metal layer consisting of the nickel-chromium alloy had a porosity of 84.6% and a coating weight of 670 g/m². Regarding the percentages of nickel and chromium, nickel was 90% by mass, and chromium was 10% by mass.

### <Heat-Treatment Step>

The resulting porous body including the main metal layer consisting of the nickel-chromium alloy was heated at 500°C for 1 hour in an air atmosphere to oxidize the skeleton. The cross-sectional elemental mapping of the skeleton with a SEM-EDX indicated that a uniform oxide layer was formed on a surface of the main metal layer in this step.

### <Removal Step>

A pair of main surfaces of the porous body including the oxide layer arranged on the surface of the main metal layer was polished with sandpaper to remove portions of the oxide layer arranged on the surface of the main metal layer included in the pair of main surfaces.

### <Conductive Layer Formation Step>

First, 450 g of a graphite powder having an average pore size of 1.0 µm was dispersed in 2.5 L of 8% by mass of a water-based polypropylene emulsion to prepare a slurry. The porous body produced as above was immersed in the slurry to coat the surface of the skeleton with the slurry. Heat treatment was performed at 135°C for 30 minutes to increase the adhesion of the resin, thereby providing a porous metal body 1 in which a conductive layer having corrosion resistance and conductivity was arranged on the surface of the oxide layer.

### -Production of Fuel Battery-

The porous metal body 1 was used for gas diffusion layers also serving as gas supply-exhaust channels of a polymer electrolyte fuel cell (single cell).

To assemble the single cell with the porous metal body 1, a commercially available MEA was used, the porous metal body 1 was cut into pieces of 5 × 5 cm, and the single cell illustrated in Figure 1 was assembled. The MEA was sandwiched between two sheets of carbon paper, and the outer sides thereof were sandwiched between two pieces of the porous metal body 1 to assemble the single cell. To prevent leakage from an air electrode and a hydrogen electrode, gaskets and recessed graphite plates were used, and the cell was fastened by means of bolts and nuts at four corners. This improved the adhesion of the components and prevented the leakage of hydrogen and air from the cell. Regarding graphite plates serving as separators, in practice, graphite plates have a thickness of about 1 to about 2 mm because of the formation of a cell stack. In this example, however, the single cell was formed, and the graphite plates had a thickness of 10 mm in order to withstand the tightening. The resulting cell is referred to as "battery A".

### [Example 2]

### -Production of Porous Metal Body-

### <Provision Step>

### (Conductive Layer Formation Step)

A sheet of a urethane resin foam having a porosity of 90%, an average pore size of 450 µm, and a thickness of 1.3 mm was used as a resin shaped body having a three-dimensional mesh-like structure. Into 1 L of 10% by mass of an acrylate-based aqueous emulsion, 900 g of a graphite powder having an average pore size of 0.5 µm was dispersed, thereby preparing a slurry. The urethane resin foam was immersed in the slurry. The urethane resin foam was drawn, passed through a nip between rollers to remove an excess of the slurry, and dried to provide a skeleton having a conductive surface. The amount of chromium applied was 20 g/m² after drying.

### (Coating Layer Formation Step)

The resulting conductive urethane resin foam was subjected to nickel electroplating by a known sulfamate bath method. The bath had a known composition mainly containing 430 g/L nickel sulfamate, 7 g/L nickel chloride, and 32 g/L boric acid. The nickel electroplating was performed at a current density of 250 mA/cm². This resulted in a resin structure in which a nickel-coating layer was arranged on the surface of the skeleton of the resin shaped body. The coating weight of nickel was 600 g/m².

Subsequently, tin plating was performed with a known sulfate bath. The sulfate bath had a composition containing 55 g/L tin(II) sulfate, 100 g/L sulfuric acid, 100 g/L cresol sulfonic acid, 2 g/L gelatin, and 1 g/L β-naphthol. Stirring (shaking of the cathode) is performed at 2 m/min in the sulfate bath with a temperature of 20°C at a cathode current density of 2 A/dm² and an anode current density of 1 A/dm² or less, thereby forming a tin-coating layer. The coating weight of tin was 150 g/m².

Thereby, a resin structure in which a main metal layer consisting of a nickel-coating layer and a tin-coating layer was arranged on the conductive coating layer containing the graphite powder was produced.

### (Removal of Resin Shaped Body)

The resin structure was heated at 800°C for 15 minutes in air to remove the resin (binder), the graphite powder, and so forth added to the resin shaped body and the slurry by burning-off. Then heat treatment was performed at 1,000°C for 50 minutes in a hydrogen atmosphere to reduce the metals partially oxidized by heating in air and to form an alloy by thermal diffusion, followed by annealing to provide a porous body including a skeleton having the main metal layer consisting of a nickel-tin alloy. The uniformity of the alloy was determined by an X-ray analysis and with an electron microscope.

Then the thickness of the porous body including the main metal layer consisting of the nickel-tin alloy was adjusted to 0.50 mm with a roller press machine. The porous body including the main metal layer consisting of the nickel-tin alloy had a porosity of 82.4% and a coating weight of 750 g/m². Regarding the percentages of nickel and tin, nickel was 80% by mass, and tin was 20% by mass.

### <Acid Treatment Step>

The porous body including the main metal layer consisting of the nickel-tin alloy was immersed in an aqueous solution of 0.5 N nitric acid at room temperature, immediately drawn, and allowed to stand at room temperature for 1 hour.

### <Heat-Treatment Step>

After the immersion in the aqueous solution of nitric acid, the porous body including the main metal layer consisting of the nickel-tin alloy was heated at 500°C for 1 hour in an air atmosphere, so that nickel nitrate on the surface of the main metal layer was decomposed and then oxidized. The cross-sectional oxygen mapping with a SEM-EDX indicated that the amount of an oxide layer formed was larger than that of the porous metal body of Example 1.

As with Example 1, portions of the oxide layer included in the pair of main surfaces of the porous body were removed, and a conductive layer having corrosion resistance and conductivity was formed on the surface of the oxide layer. The resulting porous body is referred to as a "porous metal body 2".

### -Production of Fuel Battery-

A single cell of a fuel cell was produced as in Example 1, except that the porous metal body 2 was used. This single cell is referred to as "battery B".

### [Comparative example 1]

A porous body consisting of nickel alone was produced in the same way as in Example 2, except that the coating weight of nickel was 700 g/m² and that the tin plating, the acid treatment, and the formation of the oxide layer were not performed.

Then the thickness of the porous body consisting of nickel was adjusted to 0.50 mm with a roller press machine to provide a porous metal body 3. The porous metal body 3 consisting of nickel had a porosity of 84.3%.

### [Comparative example 2]

A single cell was produced, the cell including general-purpose separators (graphite plates) in which grooves had been formed, the graphite plates serving as gas diffusion layers. The same MEA as that used in battery A was used, and sheets of carbon paper were used for the anode and the cathode. Each of the depth and the width of the grooves was 1 mm, and the distance between the grooves was 1 mm. The gas diffusion layers had an apparent porosity of about 50%. The cell is referred to as "battery C".

### [Comparative example 3]

A porous metal body 4 was produced as in Example 1, except that after the oxide layer was formed in the same way as in Example 1, polishing and the formation of the conductive layer were not performed. A single cell of a fuel battery was produced as in Example 1, except that the porous metal body 4 was used. The cell is referred to as "battery D".

### [Evaluation of corrosion resistance]

The corrosion resistance of each of the porous metal bodies 1 to 3 was evaluated by immersing the porous metal bodies in 10% sodium sulfate aqueous solutions whose pH was adjusted to 3 with sulfuric acid and checking the amount of Ni eluted when a potential of 0.8 V was applied for 1 hour. The amount of Ni eluted was determined by analyzing each solution used in this test using ICP spectrometry. Figure 2 illustrates the results.

In each of the porous metal bodies 1 and 2 produced in Examples 1 and 2, the amount of Ni eluted was 5 ppm or less. In the porous metal body 3 produced in Comparative example 1, the amount of Ni eluted was 34 ppm. The results indicated that the porous metal bodies 1 and 2 had higher corrosion resistance than the porous metal body 3.

### [Evaluation of Power Generation Characteristics]

For each of batteries A to D, the anode was supplied with hydrogen, and the cathode was supplied with air. The power generation characteristics were studied.

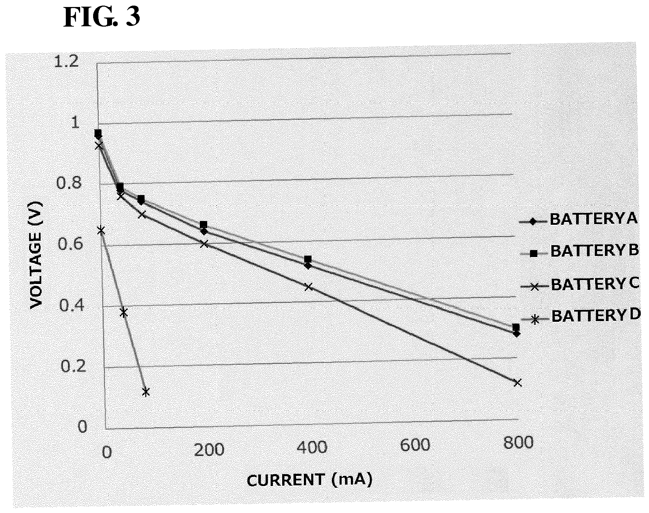

An apparatus that adjusts the supply of each gas depending on load was used for the gas supply. The ambient temperature of the electrodes was 25°C. The operating temperature was 80°C. Figure 3 illustrates the results. In Figure 3, the vertical axis represents the voltage (V), and the horizontal axis represents the current density (mA/cm²).

Batteries A and B including the porous metal bodies 1 and 2 produced in Examples 1 and 2 exhibited high voltages even in a high current region and good power generation characteristics, compared with battery C of Comparative example 2 in which the general-purpose separators were used. In contrast, battery D including the porous metal body 4 of Comparative example 3 in which no polishing was performed had poor power generation characteristics. The reason for this is presumably that because no polishing was performed, the electrical resistance was high, thus failing to provide sufficient current collecting performance.

### Reference Signs List

- M: membrane-electrode assembly (MEA)
- 1-1: ion-exchange membrane
- 2-1: gas diffusion electrode (platinum catalyst-containing activated carbon layer)
- 2-2: gas diffusion electrode (platinum catalyst-containing activated carbon layer)
- 3-1: current collector
- 3-2: current collector
- 4-1: separator
- 4-1-1: gas diffusion layer
- 4-2: separator
- 4-2-1: gas diffusion layer

## Claims

1. A porous metal body comprising:
a three-dimensional mesh-like structure consisting of a skeleton, the porous metal body having a flat plate-like external form including a pair of main surfaces and end surfaces that connect the pair of main surfaces to each other,
wherein the skeleton includes:
a main metal layer consisting of nickel or a nickel alloy; and
an oxide layer on a surface of the main metal layer,
wherein the oxide layer is not arranged on portions of the surface of the main metal layer included in the pair of main surfaces of the porous metal body.

2. The porous metal body according to claim 1,
wherein the skeleton includes a conductive layer arranged on a surface of the oxide layer.

3. The porous metal body according to claim 2, wherein the conductive layer contains a carbon powder and a binder.

4. The porous metal body according to claim 2 or 3, wherein the conductive layer contains silver.

5. The porous metal body according to any one of claims 1 to 4, wherein the nickel alloy contains nickel and at least one of chromium, tin, and tungsten.

6. The porous metal body according to any one of claims 1 to 5, wherein the oxide layer is composed of nickel oxide.

7. A fuel battery comprising the porous metal body according to any one of claims 1 to 6, the porous metal body serving as a gas diffusion layer.

8. A method for producing a porous metal body according to claim 1, comprising:
a provision step of providing a porous body having a three-dimensional mesh-like structure consisting of a skeleton, the porous body having a flat plate-like external form including a pair of main surfaces and end surfaces that connect the pair of main surfaces to each other, the skeleton including a main metal layer consisting of nickel or a nickel alloy;
a heat-treatment step of forming an oxide layer on a surface of the main metal layer by heating the porous body in an oxidizing atmosphere; and
a removal step of removing portions of the oxide layer formed on the surface of the main metal layer included in the pair of main surfaces.

9. The method for producing a porous metal body according to claim 8, further comprising:
after the provision step and before the heat-treatment step,
an acid treatment step of immersing the porous body in an acid solution and drying the porous body.

10. The method for producing a porous metal body according to claim 9, wherein the acid solution is nitric acid, sulfuric acid, hydrochloric acid, or acetic acid.

11. The method for producing a porous metal body according to any one of claims 8 to 10, further comprising:
after the heat-treatment step, a conductive layer formation step of forming a conductive layer on a surface of the oxide layer.
